# EUROPEAN PATENT SPECIFICATION

(11) **EP 3 680 037 B1**
(45) Date of publication and mention of the grant of the patent: **21.02.2024**
(21) Application number: 19213098.7
(22) Date of filing: 03.12.2019
(51) Int. Cl.: B21D 26/021, B21D 53/92, C22F 1/04

(54) **METHOD FOR PRODUCING CREEP AGE FORMED AIRCRAFT COMPONENTS**
VERFAHREN ZUR HERSTELLUNG VON CREEP-AGE-GEFORMTEN FLUGZEUGKOMPONENTEN
PROCÉDÉS DE FABRICATION DE COMPOSANTS D'AÉRONEF FORMÉS PAR FLUAGE-VIEILLISSEMENT

(30) Priority: 11.01.2019 US 201916245357
(43) Date of publication of application: 15.07.2020
(73) Proprietor: Embraer S.A., 12227-901 São José Dos Campos SP (BR)
(72) Inventor: SILVA, Edgar José da, 12227-901 São José dos Campos - SP (BR); MELLO NETO, Fernando Ferreira de, 12227-901 São José dos Campos - SP (BR); JUNIOR, Paulo Roberto Costa, 12227-901 São José dos Campos - SP (BR)
(74) Representative: Liesegang, Eva

(56) References cited:
- CN-A- 103 691 793
- CN-A- 106 180 247
- US-B1- 8 323 427

## Description

### FIELD

The embodiments disclosed herein relate generally to processes for producing aircraft components. More specifically, the embodiments disclosed herein related to method for producing creep age formed complex and curved aircraft components, for example, integrally stiffened skin panels for airfoil and fuselage structures.

### BACKGROUND

Many components used in the manufacture of aircraft have complex shapes comprised of surfaces with various curvatures of different radii and thicknesses, especially skin panels which include integral stiffeners and other integral structural members. In order to produce such complex shaped components, the aerospace industry has employed the technique of creep age forming (CAF) whereby a flat panel is machined to provide the integral structural member and thereafter constrained in a forming tool. The forming tool and machined plate is then placed in an autoclave and subjected to elevated temperature and pressure conditions for a specified period of time to relax induced stresses in the machined panel. Upon release from the constraints of the forming tool, the now creep age formed component will spring back to a shape somewhere between the shape of the forming tool and the original shape of the flat machined panel.

It is therefore imperative that the forming tool be designed in such a way that once the age forming process is completed and the component released, the component springs back to a shape that is identical to the intended final shape of the component. Forming tools employed in CAF processes are therefore very difficult to design due to the fact that the machined flat panel will have different spring back characteristics depending upon the type and thickness of the material, the radius of curvature at different points on the component and the influences due to the curvature of adjacent position of the component itself. For these reasons, various proposals have been provided in the art in order to address such springback related problems with CAF techniques as disclosed in U.S. Patent Nos. 5, 168,169; 5,341,303 and 5,729,462.

While the conventional CAF technique as described above is satisfactory for some aircraft components, other components must be made by different manufacturing techniques such as machining and/or preening. For example, components that have low bending stiffness, relatively thin stiffeners, surface pads and/or pockets, large openings (e.g., fuselage skin window openings) and large radii of curvature at or near the component edges are all known to be difficult (if not virtually impossible) to produce using conventional CAF techniques. CN 106180247 refers to a method for manufacturing high-reinforced aluminum alloy wall panels. The high-reinforced aluminum alloy siding is a double-curved siding with I-shaped or T-shaped high-reinforced strips. The rolled aluminum alloy thick plate is formed into the require curve surface shape by multi-point compression. After that, the ribs and web structure are milling.

CN 103 691 793 discloses a method for forming an aircraft component by creep age forming a flat panel.

It would therefore be desirable if a CAF process could be developed which addressed the difficulties noted above to thereby allow a greater variety of aircraft components to be produced by such techniques. It is towards fulfilling such a need that the embodiments disclosed herein are directed.

### SUMMARY

The embodiments disclosed herein broadly involve subjecting a flat plate to CAF processing to produce a curved product preform and thereafter machining the curved product preform to remove material therefrom so as to produce the final aircraft component. More specifically, the embodiments disclosed herein include the sequential steps of:
(a) providing a flat plate;
(b) placing the flat plate on a forming tool defining a curved surface which approximates a final curved shape of the aircraft component;
(c) subjecting the flat plate on the forming tool to creep age forming in an autoclave to produce a curved component preform thereof; and thereafter
(d) machining the curved component preform to form the integral features and thereby produce the aircraft component.

According to certain embodiments, the flat plate may be subjected to autoclave conditions for a time sufficient to allow the flat plate to assume the approximate final curved shape of the aircraft component.

The flat plate that is the starting raw material for the process will preferably have a perimetrical dimension that is identical to the aircraft component, and a thickness dimension that is at least equal to a thickest portion of the aircraft component. The flat plate may for example have a substantially constant thickness. Machining of such flat plate is therefore practiced so as to mill the curved component preform and thereby remove material thereof so as to form the integral features of the aircraft component, e.g., stiffeners, pads, pockets and openings.

These and other aspects and advantages of the present invention will become more clear after careful consideration is given to the following detailed description of the preferred exemplary embodiments thereof.

### BRIEF DESCRIPTION OF ACCOMPANYING DRAWINGS

The disclosed embodiments of the present invention will be better and more completely understood by referring to the following detailed description of exemplary non-limiting illustrative embodiments in conjunction with the drawings of which:
FIG. 1 schematically depicts in perspective an aircraft that may include a final component part produced by the CAF process of the embodiments disclosed herein;
FIG. 2 is an enlarged view of an final component part in the form of an aircraft wing skin with integral stiffeners that is part of the aircraft depicted in FIG. 1; and
FIGS. 3A-3E schematically depict the process steps for producing creep age formed components according to the invention.

### DETAILED DESCRIPTION

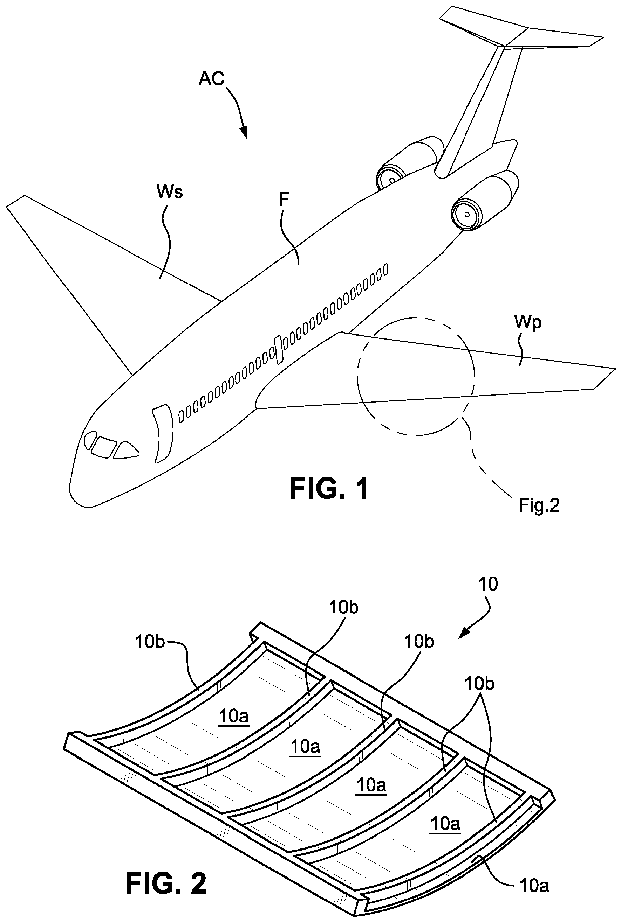

An aircraft AC is depicted in FIG. 1 as having a fuselage structure F and port and starboard wing structures Wp, Ws, respectively. Each of the fuselage structure F and wing structures Wp, Ws may be formed of complex curved skin components having integral stiffeners. For example FIG. 2 depicts an enlarged exemplary final component skin panel 10 of the port wing structure Wp having an external skin 10a and integral stiffeners 10b. It will of course be understood that in order to provide visual clarity, the depiction of the final skin panel component 10 in FIG. 2 is inverted as compared to its position on the port wing structure Wp of the aircraft AC shown in FIG. 1.

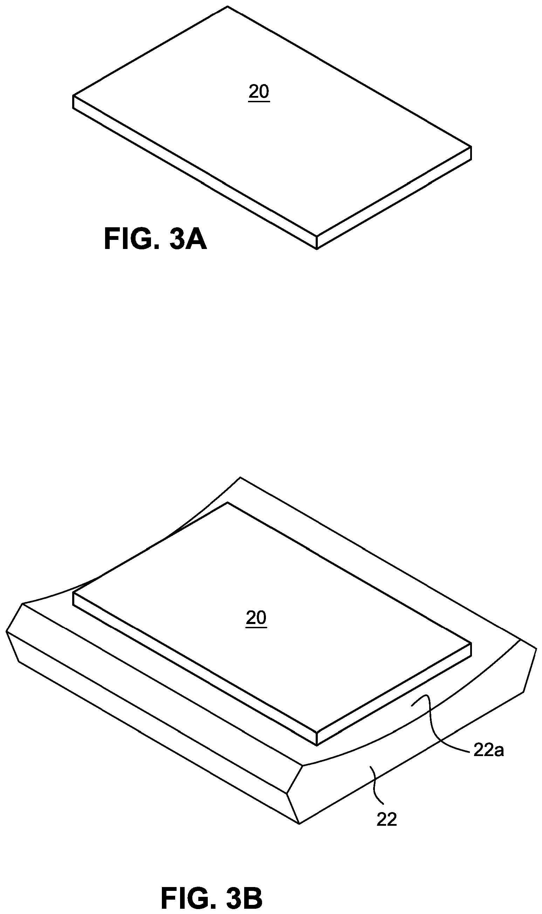

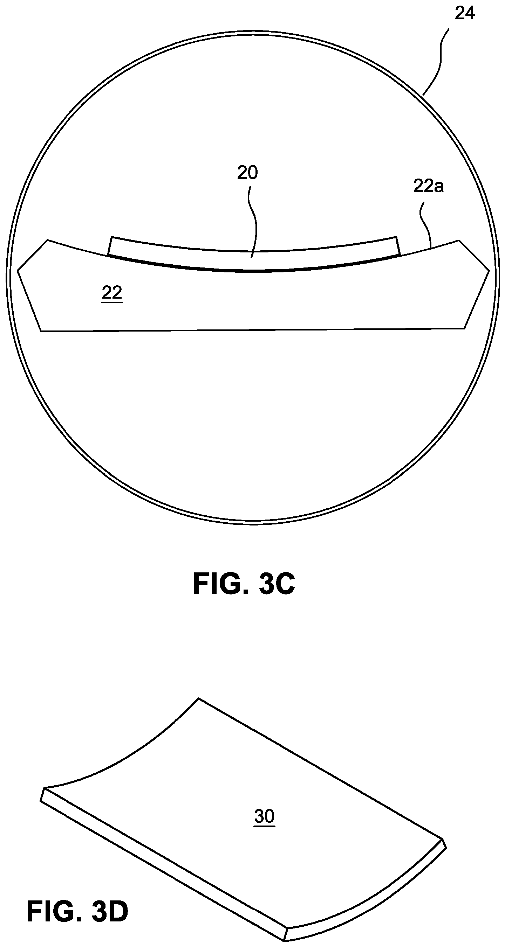

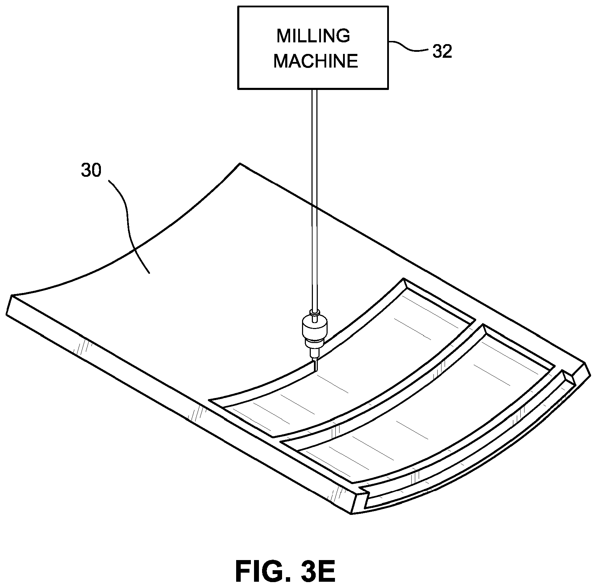

The process to produce the exemplary final wing skin panel component 10 according to the embodiments of the invention begins with providing a flat plate 20 formed of a metal alloy (e.g., aluminum alloy) as depicted in FIG. 3A. The flat plate 20 will be designed and configured so as to have a perimetrical dimension identical to that of the final shaped component 10 and a thickness dimension that is at least equal to the greatest thickness dimension that is present at any location in the final shaped component 10.

The flat plate 20 is placed in a forming tool 22 (FIG. 1B) which has a forming surface 22a designed and configured to impart the necessary curvature(s) to the plate 20 that will be required of the final shaped component 10 while also allowing for springback. The flat plate 20 and forming tool 22 may then be placed within an autoclave 24 (FIG. 1C) and subjected to elevated temperatures and pressures for a time sufficient to creep age form the plate 20. As is conventional, a vacuum bag (not shown) may be employed to envelope the flat plate 20 so as to assist in the forming of the plate 20 within the autoclave 24 by the forming tool 22.

FIG. 1D depicts the post-creep age formed plate (now designated a curved plate preform 30) following its removal from the autoclave 24 and subsequent to springback. Thus, as depicted in FIG. 1D, the curved plate preform 30 will possess the identical perimetrical dimensions of the final component 10 as well as the identical curvature shape of the final component 10. However, the plate preform 30 will not possess the identical configuration of the final component 10 it does not possess the integral skin 10a and integral stiffeners 10b. The curved plate preform 30 will thus be subjected to machining operations as shown in FIG. 1E by suitable milling machines 32 so as to form the integral skin and stiffener components 10a, 10b, respectively.

The CAF process described above has several advantages as compared to conventional CAF processes. For example, the stresses developed in the raw-material during creep age forming are higher and more uniformly distributed, which leads to less springback, less tooling surface compensation and less tool surface complexity.

The process of the embodiments herein leverages the benefits and flexibility of machining, which is very suitable to produce details on curved surfaces. In doing so, the inventive process eliminates some of the previously stated problems associated with conventional creep age forming. For example, a plate self-evidently does not have stiffeners, pads, pockets or large openings and thus creep age forming can be applied to the plate to produce a curved plate preform that can be subsequently machined to provide such stiffeners, pads, pockets and/or large openings. Also a creep age formed plate may have smaller curvatures and have sufficient machining allowance to contain within its volume the edges of the final machined part that have large curvatures.

The process of the embodiments herein also leverages the advantages associated with CAF dimensional repeatability and low residual stresses that are achieved to optimize the volume of the raw-material when compared to forgings. Lower residual stresses provide for lower distortion which in turn provide for lower required machining allowance. Applying CAF to a broader set of parts may therefore be economically advantageous by the process disclosed herein, considering the lower volume of raw material necessary to obtain the parts.

The dependency of the maturity of the part design is greatly reduced because any change that does not modify the raw material thickness or the initial curvatures can be implemented without any change in the forming tool. The dependency of the dimensional quality of the final machined part on the quality of the CAF process is greatly reduced. The machining allowance provides greater flexibility to accommodate dimensional deviations from the CAF process and therefore the simulation model accuracy requirement for the final component design is less stringent.

The time to design the flat panel is greatly reduced because the object to be flattened is much simpler. The engineering labor and computational time required to calculate the tool surface is also greatly reduced because of the simple shape of the flat plate that is used as the raw-material. Further, the labor to make the vacuum bag and the risk of rupture are also reduced because the object to be bagged is much simpler since the flat plate does not yet possess any integral components, e.g., integral stiffeners, stringers and openings, when the plate is subjected to autoclave conditions.

Thus, while reference is made to a particular embodiment of the invention, various modifications within the skill of those in the art may be envisioned. Therefore, it is to be understood that the invention is not to be limited to the disclosed embodiment, but on the contrary, is intended to cover various modifications and equivalent arrangements included within the scope of the appended claims.

## Claims

1. A process for producing an aircraft component having integral structural features which comprises the sequential steps of:
(a) providing a flat plate (20);
(b) placing the flat plate (20) on a forming tool (22) defining a curved surface which approximates a final curved shape of the aircraft component;
(c) subjecting the flat plate (20) on the forming tool (22) to creep age forming in an autoclave (24) to produce a curved component preform (30) thereof; the process being **characterised by**
(d) machining the curved component preform (30) to form the integral features and thereby produce the aircraft component.

2. The process according to claim 1, wherein step (c) comprises subjecting the flat plate (20) to autoclave (24) conditions for a time sufficient to allow the flat plate to assume the approximate final curved shape of the aircraft component.

3. The process according to claim 1 or 2, wherein step (a) comprises providing a flat plate (20) that has perimetrical dimension that is identical to the aircraft component, and a thickness dimension that is at least equal to a thickest portion of the aircraft component.

4. The process according to claim 3, wherein the thickness of the flat plate (20) is substantially constant.

5. The process according to one of the preceding claims, wherein step (d) is practiced so as to mill the curved component preform (30) to remove material thereof and form the integral features of the aircraft component.

6. The process according to one of the preceding claims, wherein step (c) comprises placing the flat plate (20) within a vacuum forming bag.

7. The process according to one of the preceding claims, wherein the integral features includes at least one selected from the group consisting of stiffeners, pads, pockets and openings.

## Patentansprüche

1. Verfahren zum Herstellen einer Flugzeugkomponente mit integralen Strukturmerkmalen, das die folgenden sequenziellen Schritte umfasst:
(a) Bereitstellen einer flachen Platte (20);
(b) Platzieren der flachen Platte (20) auf einem Formwerkzeug (22), das eine gekrümmte Fläche definiert, die sich einer endgültigen gekrümmten Form der Flugzeugkomponente annähert;
(c) Unterziehen der flachen Platte (20) auf dem Formwerkzeug (22) einer Kriechalterungsformung in einem Autoklav (24), um daraus eine gekrümmte Komponentenvorform (30) herzustellen; wobei das Verfahren durch Folgendes gekennzeichnet ist
(d) Bearbeiten der gekrümmten Komponentenvorform (30), um die integralen Merkmale zu formen und dadurch die Flugzeugkomponente herzustellen.

2. Verfahren nach Anspruch 1, wobei Schritt (c) das Unterziehen der flachen Platte (20) Autoklav(24)-Bedingungen für eine Zeit umfasst, die ausreichend ist, um es der flachen Platte zu erlauben, die angenäherte endgültige gekrümmte Form der Flugzeugkomponente anzunehmen.

3. Verfahren nach Anspruch 1 oder 2, wobei Schritt (a) das Bereitstellen einer flachen Platte (20) umfasst, die eine Umfangsabmessung aufweist, die mit der Flugzeugkomponente identisch ist, und eine Dickenabmessung, die mindestens einem dicksten Abschnitt der Flugzeugkomponente gleich ist.

4. Verfahren nach Anspruch 3, wobei die Dicke der flachen Platte (20) im Wesentlichen konstant ist.

5. Verfahren nach einem der vorhergehenden Ansprüche, wobei Schritt (d) praktiziert wird, um die gekrümmte Komponentenvorform (30) zu fräsen, um Material davon zu entfernen und die integralen Merkmale der Flugzeugkomponente zu formen.

6. Verfahren nach einem der vorhergehenden Ansprüche, wobei Schritt (c) das Platzieren der flachen Platte (20) in einen Vakuumformbeutel umfasst.

7. Verfahren nach einem der vorhergehenden Ansprüche, wobei die integralen Merkmale mindestens eines beinhaltet, das aus der Gruppe ausgewählt ist, die aus Versteifungen, Auflagen, Taschen und Öffnungen besteht.

## Revendications

1. Procédé pour produire un composant d'aéronef ayant des caractéristiques structurelles solidaires, comprenant les étapes séquentielles consistant à :
(a) prévoir une plaque plate (20) ;
(b) placer la plaque plate (20) sur un outil de formage (22) définissant une surface courbée qui s'approche d'une forme courbée finale du composant d'aéronef ;
(c) soumettre la plaque plate (20) sur l'outil de formage (22) au formage par fluage - vieillissement dans un autoclave (24) afin de produire sa préforme de composant courbé (30) ; le procédé étant **caractérisé par** l'étape consistant à :
(d) usiner la préforme de composant courbé (30) afin de former les caractéristiques solidaires et produire ainsi le composant d'aéronef.

2. Procédé selon la revendication 1, dans lequel l'étape (c) comprend l'étape consistant à soumettre la plaque plate (20) aux conditions d'un autoclave (24) pendant un temps suffisant pour permettre à la plaque plate d'adopter la forme courbée finale approximative du composant d'aéronef.

3. Procédé selon la revendication 1 ou 2, dans lequel l'étape (a) comprend l'étape consistant à fournir une plaque plate (20) qui a une dimension périmétrale qui est identique au composant d'aéronef, et une dimension d'épaisseur qui est au moins égale à la partie la plus épaisse du composant d'aéronef.

4. Procédé selon la revendication 3, dans lequel l'épaisseur de la plaque plate (20) est sensiblement constante.

5. Procédé selon l'une des revendications précédentes, dans lequel l'étape (d) est pratiquée afin de fraiser la préforme de composant courbé (30) afin de retirer son matériau et former les caractéristiques solidaires du composant d'aéronef.

6. Procédé selon l'une des revendications précédentes, dans lequel l'étape (c) comprend l'étape consistant à placer la plaque plate (20) à l'intérieur d'un sac de formage sous vide.

7. Procédé selon l'une des revendications précédentes, dans lequel les caractéristiques solidaires comprennent au moins un élément sélectionné dans le groupe comprenant des raidisseurs, des patins, des poches et des ouvertures.
